Europäisches Patentamt

European Patent Office

Office européen des brevets

(19)

(11) Numéro de publication : **0 165 887**
**B1**

(12) **FASCICULE DE BREVET EUROPÉEN**

(45) Date de publication du fascicule du brevet :
28.06.89

(21) Numéro de dépôt : 85440006.6

(22) Date de dépôt : 06.02.85

(51) Int. Cl.⁴ : **A 01 B 29/04**, E 01 C 19/23

(54) **Rouleau agricole et machine agricole utilisant ce rouleau.**

(30) Priorité : 10.02.84 FR 8402187

(43) Date de publication de la demande :
27.12.85 Bulletin 85/52

(45) Mention de la délivrance du brevet :
28.06.89 Bulletin 89/26

(84) Etats contractants désignés :
**BE DE GB IT NL**

(56) Documents cités :
**FR–A– 2 112 245**
**FR–A– 2 372 583**

(73) Titulaire : **KUHN S.A.**
**4, Impasse des Fabriques**
**F-67700 Saverne (FR)**

(72) Inventeur : **Wattron, Bernard**
**159, rue Principale Schwenheim**
**F-67440 Marmoutier (FR)**
Inventeur : **Metzger, Bernard**
**13, rue d'Arlange**
**F-57260 Val de Bride (FR)**

Jouve, 18, rue St-Denis, 75001 Paris, France

## Description

La présente invention concerne un rouleau agricole comportant une âme centrale munie de saillies dirigées vers l'extérieur et disposées suivant des couronnes entre lesquelles sont agencés des organes racleurs qui s'étendent jusqu'à ladite âme centrale, lesdits organes racleurs comportant des moyens qui leur permettent de pivoter autour d'un axe s'étendant transversalement à la direction d'avance du rouleau.

Un rouleau agricole comportant une âme centrale munie de saillies dirigées vers l'extérieur et disposées suivant des couronnes entre lesquelles sont agencés des organes racleurs qui s'étendent jusqu'à ladite âme centrale, tel que celui décrit dans la FR-A-2.281.050, est particulièrement adapté pour travailler dans des types de terrain très variés. Les organes racleurs disposés entre les couronnes formées par les saillies, ont pour fonction d'éviter qu'une partie de la terre qui a été travaillée par le rouleau, n'adhère à son âme centrale. En pratique, il s'est cependant avéré que les dispositifs de décrottage connus ne permettaient pas de décoller de manière satisfaisante dans toutes les conditions, la terre qui arrive à se coller à l'âme centrale du rouleau. Ce mauvais décrottage est en grande partie dû aux défauts géométriques de l'âme centrale du rouleau. Ces défauts sont inévitables, compte tenu des caractéristiques que doit avoir ce rouleau, à savoir dimensions, poids, prix, etc... En effet, pour diminuer le poids du rouleau, l'âme centrale est en général formée par un tube dont la paroi est relativement faible par rapport à son diamètre. Par ailleurs, compte tenu des dimensions du type de tube à employer, ce dernier possède des tolérances dimensionnelles et de forme assez larges. Ce tube peut en particulier présenter une flèche initiale relativement importante. Ces défauts géométriques initiaux seront encore accentués lors du soudage des saillies sur la surface extérieure du tube. On ajoutera également encore des défauts lors de la réalisation des extrémités du rouleau qui permettront de traîner celui-ci pendant le travail. Ces derniers défauts sont notamment des défauts de positionnement des axes géométriques des paliers par rapport à l'axe longitudinal théorique de l'âme centrale du rouleau. L'addition de tous ces défauts engendre un faux-rond de la surface extérieure de l'âme centrale du rouleau, lorsque ce dernier tourne autour de l'axe défini par les paliers situés à ses extrémités. Les organes racleurs doivent donc être réglés pour qu'ils tangentent l'âme centrale du rouleau au point de l'âme centrale qui décrit la plus grande trajectoire. Si on ne prend pas cette précaution, les organes racleurs arriveront à entailler l'âme centrale du rouleau au bout d'un certain temps de travail. Or, un rouleau dont l'âme centrale est entaillée, doit être remplacé, ce qui représente une grande dépense pour l'utilisateur de ce rouleau. On comprendra alors que si les organes racleurs ont été réglés pour tangenter l'âme centrale du rouleau au point de l'âme centrale qui décrit la plus grande trajectoire, ils seront éloignés de l'âme centrale d'une distance égale au faux-rond lorsque le rouleau aura tourné d'un demi-tour. On comprendra également qu'en cet endroit où les organes racleurs sont éloignés de l'âme centrale, ils sont incapables de décoller la terre qui y est collée. Ces accumulations de terre croissent de plus en plus au cours du travail et exercent sur les organes racleurs un effort de plus en plus important qui déformera progressivement en flexion et en torsion, le support sur lequel sont montés ces organes racleurs. Il en résulte une augmentation continuelle de la puissance nécessaire à la traction du rouleau. Lorsque cet effort exercé par les accumulations de terre sur les organes racleurs, atteint une certaine valeur, les saillies qui entraînent le rouleau en rotation à partir du sol, ne peuvent plus assurer cet entraînement du rouleau qui glisse alors sur le sol sans rouler et racle ce sol à la manière d'une lame niveleuse. A ce stade, l'utilisateur ne peut plus poursuivre son travail mais doit d'abord éloigner les accumulations de terre qui adhèrent à l'âme centrale du rouleau, et étaler la masse de terre que le rouleau aura raclée pendant son glissement. Il est évident que si ces arrêts sont trop fréquents, ils occasionnent une perte de temps considérable qui n'est pas tolérée par l'utilisateur. Si l'entraînement du rouleau est assez puissant pour que les accumulations de terre ne puissent pas bloquer sa rotation, il peut arriver que les organes racleurs subissent des déformations permanentes qui les rendent inutilisables ou peuvent même être arrachés de leur support. Les organes racleurs déformés ou arrachés doivent être obligatoirement remplacés, ce qui occasionne également des pertes de temps considérables et des frais de pièce de rechange et de main d'œuvre très importants.

Dans la FR-A-2.372.583 de laquelle part la revendication 1, on a essayé de proposer une solution à ce problème en équipant le rouleau d'un dispositif de décrottage dont les organes racleurs peuvent pivoter autour d'un axe s'étendant parallèlement à l'axe du rouleau. Ce pivotement se fait à l'encontre d'un ressort. Pour pouvoir décoller efficacement toute la terre qui adhère à l'âme centrale du rouleau, il faut que le ressort presse énergiquement les organes racleurs contre l'âme centrale même au point de l'âme centrale qui décrit la plus petite trajectoire. On comprendra que, lorsque le rouleau tourne, cette pression va augmenter substantiellement jusqu'à être maximale au point de l'âme centrale qui décrit la plus grande trajectoire. Ceci signifie alors que la puissance nécessaire à la traction du rouleau est relativement importante, compte tenu de la pression exercée par l'ensemble des organes racleurs sur l'âme centrale. Par ailleurs, le frottement continuel sous charge des organes racleurs sur l'âme centrale du rouleau, entraîne une usure rapide du rouleau.

Dans la FR-A-2.112.245, on connaît un rouleau destiné à la compression des asphaltes. Ce rouleau est lisse et ne comporte pas de saillies. Un organe racleur est fixé à l'extrémité libre de deux bras qui peuvent pivoter autour d'un axe parallèle au rouleau et des ressorts maintiennent l'organe racleur en contact avec le rouleau. Afin de limiter la pression qu'exerce l'organe racleur sur le rouleau, les bras sont chacun munis d'un galet. Les galets roulent sur la surface extérieure du rouleau et sont susceptibles de s'écarter dudit rouleau conjointement avec l'organe racleur et à l'encontre des ressorts. Ces galets ne peuvent donc pas faire sensiblement garder à l'organe racleur sa position par rapport à une partie au moins de la surface extérieure du rouleau.

Le but de la présente invention est de remédier aux inconvénients des dispositifs de décrottage de l'art antérieur.

Dans ce but, le rouleau selon la présente invention est caractérisé par le fait que les moyens permettent aux organes racleurs de pivoter librement autour de l'axe s'étendant transversalement à la direction d'avance du rouleau, et qu'au moins un élément palpeur fait sensiblement garder aux organes racleurs leur position par rapport à une partie au moins de la surface extérieure de l'âme centrale du rouleau.

Selon une réalisation préférentielle de l'invention, l'axe autour duquel peuvent pivoter les organes racleurs, est sensiblement parallèle à l'axe du rouleau.

Grâce à l'invention, les organes racleurs peuvent suivre le faux-rond de l'âme centrale du rouleau. Ceci entraîne un meilleur décrottage de cette âme centrale puisque les organes racleurs gardent sensiblement leur position relative par rapport à celle-ci pendant la rotation du rouleau. Ce meilleur décrottage permet également d'éliminer les problèmes de déformation ou d'arrachage des organes racleurs. Par ailleurs, les organes racleurs ne frottent pas ou éventuellement très faiblement sur l'âme centrale du rouleau de sorte que les problèmes de puissance élevée nécessaire à la traction du rouleau, et d'usure prématurée de l'âme centrale du rouleau sont également éliminés.

Selon une autre caractéristique de l'invention, le point de palpage du ou des éléments palpeurs est situé d'un côté du plan passant sensiblement par l'axe du rouleau et l'axe de pivotement des organes racleurs, tandis que le point de raclage des organes racleurs est situé de l'autre côté de ce plan. Préférentiellement le point de palpage des éléments palpeurs est sensiblement diamétralement opposé au point de raclage des organes racleurs, par rapport à l'âme centrale du rouleau. Avantageusement les éléments palpeurs palpent la surface extérieure de l'âme centrale du rouleau.

De cette sorte, le palpage est particulièrement facile à mettre en œuvre et les éléments palpeurs permettent aux organes racleurs de bien suivre le faux-rond de l'âme centrale du rouleau.

Selon une caractéristique supplémentaire de l'invention, la distance du point de palpage à l'axe de pivotement des organes racleurs est sensiblement égale à la distance du point de raclage à ce même axe. Avec cet agencement, les déplacements des organes racleurs et des éléments palpeurs restent sensiblement égaux.

Cependant, selon une autre caractéristique de l'invention, la distance du point de palpage à l'axe de pivotement des organes racleurs peut être différente de la distance du point de raclage à ce même axe. Préférentiellement, la distance du point de palpage à l'axe de pivotement est supérieure à la distance du point de raclage à ce même axe. Cette disposition permet de créer au niveau de l'organe racleur un effort amplifié par rapport à l'effort qu'exerce l'âme centrale du rouleau sur l'élément palpeur correspondant.

Etant donné que le faux-rond peut varier sur la longueur du rouleau, il est particulièrement intéressant de séparer les organes racleurs en groupes d'organes racleurs indépendants les uns des autres, et de doter chaque groupe d'au moins un élément palpeur.

Le décrottage sera optimal si tous les organes racleurs sont indépendants les uns des autres et si chaque organe racleur possède son propre élément palpeur.

L'invention concerne aussi les machines agricoles équipées d'au moins un rouleau de travail du sol. La machine selon la présente invention est caractérisée par le fait qu'elle comporte au moins un rouleau selon une ou plusieurs des caractéristiques décrites ci-dessus ou dans la description suivante.

D'autres caractéristiques et avantages de l'invention apparaîtront dans la description ci-dessous, nullement limitative, de deux exemples de réalisation de l'invention. Cette description est faite à l'aide des dessins annexés sur lesquels :

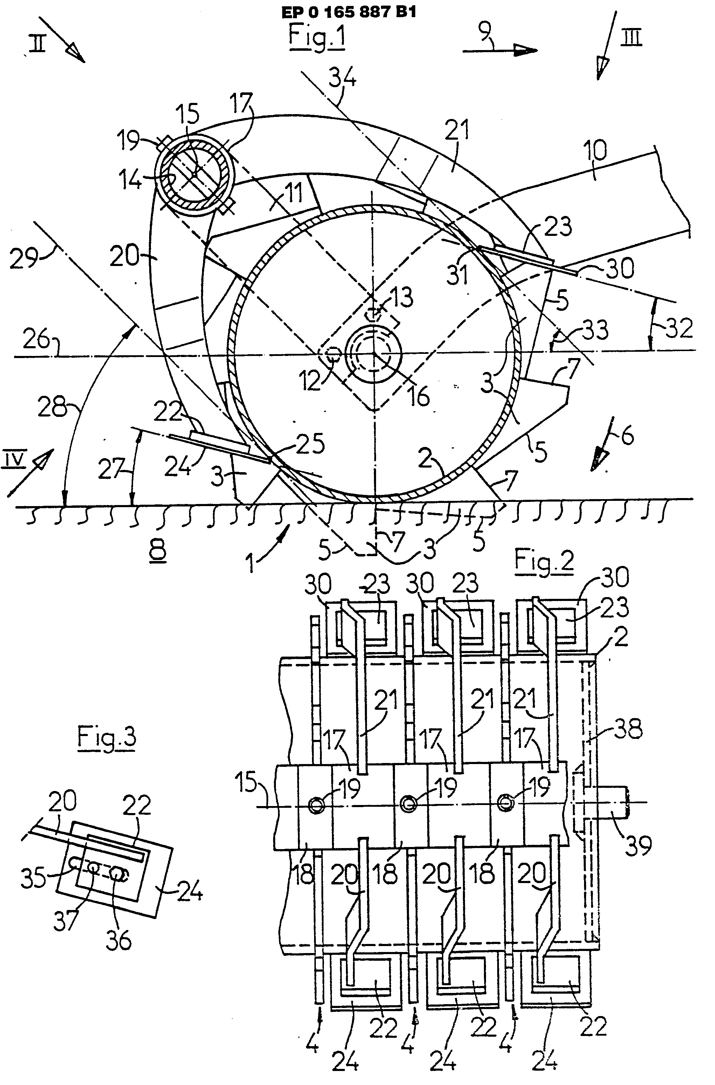

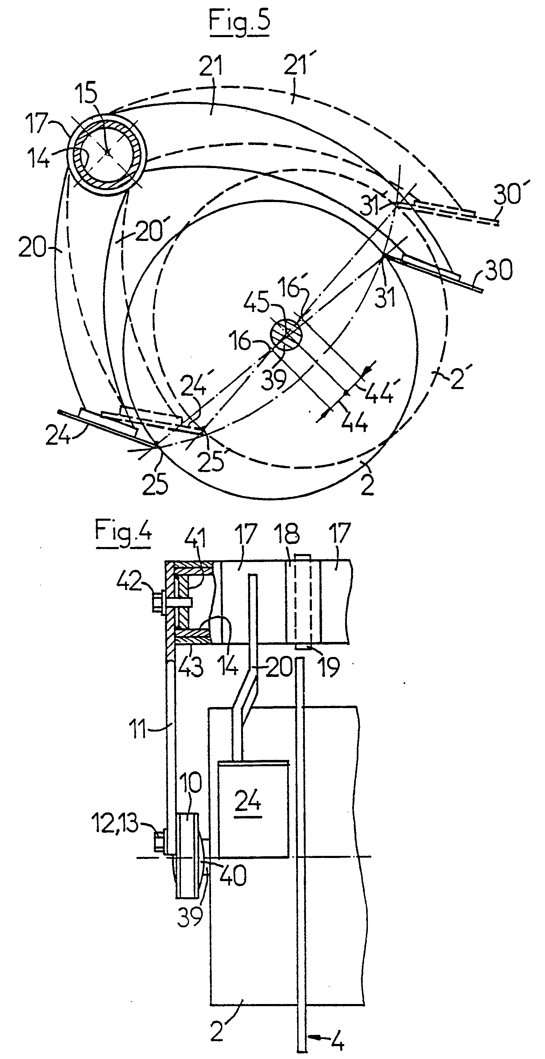

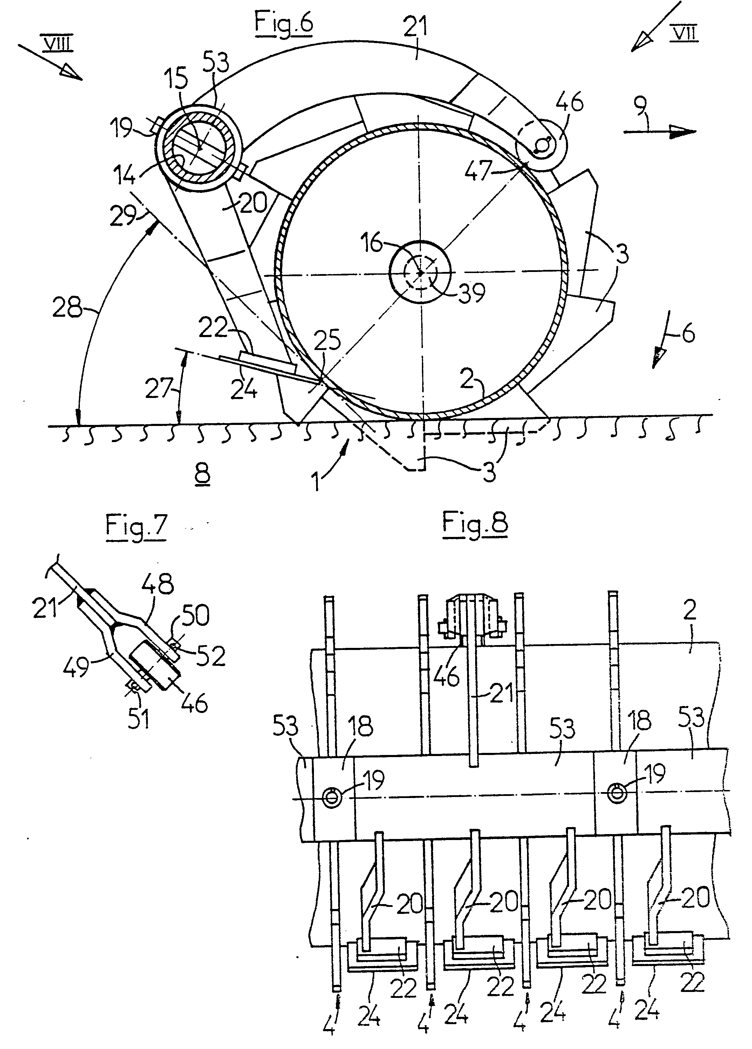

- La figure 1 représente une vue en coupe d'un rouleau selon l'invention, par un plan sensiblement perpendiculaire à son axe longitudinal, - La figure 2 représente une vue suivant la flèche II, du rouleau représenté sur la figure 1, - La figure 3 représente une vue suivant la flèche III, d'un élément palpeur représenté sur la figure 1, - La figure 4 représente une vue suivant la flèche IV, d'une extrémité du rouleau représenté sur la figure 1, - La figure 5 représente une vue schématique du rouleau selon l'invention, suivant son axe longitudinal, - La figure 6 représente une vue en coupe d'une variante de réalisation d'un rouleau selon l'invention, par un plan sensiblement perpendiculaire à son axe longitudinal, - La figure 7 représente une vue suivant la flèche VII, d'un élément palpeur représenté sur la figure 6, - La figure 8 représente une vue suivant la flèche VIII, du rouleau représenté sur la figure 6.

Sur la figure 1, le rouleau de travail du sol (1) comporte une âme centrale (2) sur la surface extérieure de laquelle est fixé un certain nombre de saillies (3). Ces saillies (3) sont disposées suivant des couronnes (4) espacées les unes des autres, tel que visible sur la figure 2. Préférentiellement, l'espace entre les différentes couronnes (4) est sensiblement identique. Les saillies (3) ont la forme d'une plaque, dont le côté (5) situé le plus en avant, compte tenu du sens de rotation (6) du rouleau, est sensiblement dirigé suivant une tangente à la surface extérieure de l'âme centrale (2) du rouleau (1), tandis que le côté (7) situé le plus en arrière, compte tenu du sens de rotation (6) du rouleau, est sensiblement dirigé radialement à ladite surface extérieure. Cette disposition permet au côté (5) de s'enfoncer facilement dans le sol (8) et au côté (7) d'être énergiquement freiné par le sol (8) lorsque le rouleau (1) est tiré dans le sens de la flèche (9), provoquant ainsi un bon entraînement en rotation du rouleau (1). La traction du rouleau (1) est réalisée au moyen d'un tirant (10) situé à chaque extrémité du rouleau (1). La liaison entre les tirants (10) et le rouleau (1) sera expliquée plus loin plus en détail.

Sur chaque tirant (10) est fixé un bras support (11) à l'aide de deux vis (12, 13). A leur extrémité éloignée du tirant (10) respectif, les bras support (11) sont reliés entre eux par une traverse (14). Cette traverse (14) est constituée par un tube rond dont l'axe longitudinal (15) s'étend de manière non limitative derrière l'axe longitudinal (16) de l'âme centrale (2), compte tenu du sens d'avance (9) et sensiblement parallèlement à cet axe (16). Sur cette traverse (14) est enfilé un certain nombre de bagues (17) et de bagues entretoise (18) (figure 2), de sorte qu'entre deux bagues entretoise (18) s'étende une bague (17). Chaque bague entretoise (18) est fixée à la traverse (14) de sorte qu'au moins son mouvement de translation le long de l'axe longitudinal (15) de la traverse (14) soit condamné. Dans la réalisation représentée, cette liaison est totale et est effectuée au moyen d'une goupille (19). Les bagues entretoise (18) déterminent ainsi la position des bagues (17) par rapport aux couronnes (4) de saillies (3). Chaque bague (17) peut tourner autour de l'axe longitudinal (15) de la traverse (14) et comporte deux bras (20, 21) à l'extrémité libre respective desquels est fixée une plaque (22, 23). Les bras (20, 21) sont fixés à la bague (17) et les plaques (22, 23) aux bras (20, 21) par un moyen connu, tel que soudure par exemple.

La plaque (22) est munie d'une plaquette (24) qui s'étend jusqu'en un point (25) de la surface extérieure de l'âme centrale (2) du rouleau (1) ou du moins jusque très près de ce point. La plaquette (24) constitue l'organe racleur. Le point (25) est préférentiellement situé plus bas que l'horizontale (26) coupant l'axe (16) du rouleau. La direction de la plaquette (24) forme avec le sol (8) un angle (27) dont la valeur est avantageusement inférieure à celle de l'angle (28) que forme la tangente (29) à l'âme centrale (2) au point (25) avec le sol (8).

La plaque (23) est munie d'une plaquette (30) qui s'étend jusqu'en un point (31) de la surface extérieure de l'âme centrale (2) ou du moins jusque très près de ce point. La plaquette (30) constitue l'élément palpeur. Le point (31) est préférentiellement sensiblement diamétralement opposé au point (25) par rapport à l'âme centrale (2). On ne sortira cependant pas du cadre de l'invention si les points (25 et 31) ne sont pas diamétralement opposés par rapport à l'âme centrale (2). La direction de la plaquette (30) forme avec l'horizontale (26) un angle (32) dont la valeur est avantageusement inférieure à celle de l'angle (33) que forme la tangente (34) à l'âme centrale (2) au point (31) avec l'horizontale (26).

La différence entre les valeurs des angles (32 et 33) est préférentiellement sensiblement égale à la différence entre les valeurs des angles (27 et 28).

Par ailleurs, la distance du point (25) à l'axe longitudinal (15) de la traverse (14) est sensiblement égale à la distance du point (31) à ce même axe (15).

Sur la figure 2, on voit que les plaquettes (24, 30) s'étendent de manière sensiblement centrée entre les couronnes (4) de saillies (3). Près de leur extrémité libre, les bras (20, 21) sont cambrés et sont fixés de manière décentrée sur les plaques (22, 23). Ceci permet de fixer aisément les plaquettes (24, 30) aux plaques (22, 23). La fixation de la plaquette (24), c'est-à-dire l'organe racleur, est représentée sur la figure 3. A cet effet, la plaque (22) comporte deux trous, tandis que la plaquette (24) comporte un trou oblong (35). Dans l'un des trous de la plaque (22) est engagé un boulon (36) qui traverse la plaque (22) et la plaquette (24), et sur l'extrémité filetée duquel est vissé un écrou (non représenté). Afin d'empêcher la rotation de la plaquette (24) autour de la tige du boulon (36), on a engagé dans le deuxième trou de la plaque (22) une goupille (37) qui s'étend également à travers le trou oblong (35). Cette fixation autorise ainsi le réglage de la position de la plaquette (24) par rapport à l'âme centrale (2) du rouleau.

La fixation de la plaquette (30), c'est-à-dire de l'élément palpeur, peut être faite de manière semblable à celle de la plaquette (24). Il sera possible de supprimer éventuellement le réglage de la position de la plaquette (30) par rapport à l'âme centrale (2) du rouleau. Néanmoins, pour un fonctionnement efficace du dispositif, il est préférable que la position de la plaquette (30) soit réglable.

Sur la figure 2, on voit encore les moyens qui permettent la liaison du rouleau (1) et des tirants (10). Ces moyens sont respectivement situés à chaque extrémité du rouleau (1), et comportent un flasque (38) fixé à l'intérieur de l'âme centrale (2) du rouleau et un pivot (39) fixé au flasque (38) sensiblement au centre de celui-ci. La liaison entre le tirant (10) et le pivot (39) se fait au moyen d'un palier à roulement (40) (figure 4) connu. L'axe commun aux deux pivots (39) définit l'axe de rotation du rouleau (1).

La figure 4 montre la liaison de la traverse (14) et des bras support (11). Comme dit plus haut, les bras support (11) sont fixés sur les tirants (10) à l'aide de deux vis (12, 13) et supportent à leur extrémité éloignée des tirants (10) la traverse (14). Pour ce faire, la traverse (14) est à chaque extrémité bouchée par un disque (41) qui comporte un trou fileté, en face duquel se trouve un trou aménagé dans le bras support (11). Une vis (42) traverse le trou aménagé dans le bras support (11) et est vissée dans le trou fileté du disque (41). Entre la dernière bague (17) et le bras support (11) s'étend une bague entretoise d'extrémité (43) qui définit la position de la dernière bague (17). La longueur de cette bague entretoise d'extrémité est telle que lorsque la vis (42) est entièrement serrée, la bague (17) puisse tourner sur la traverse (14).

Le rouleau qui vient d'être décrit, fonctionne de la manière suivante. Comme dit plus haut, le faux-rond de l'âme centrale (2) du rouleau peut être relativement important. Ce faux-rond provient en grande partie de la flèche initiale de l'âme centrale (2) et du mauvais positionnement de l'axe des pivots (39) lors de la fabrication du rouleau. Il se rajoute par ailleurs un faux-rond qui provient de la flexion de l'âme centrale (2) apparaissant pendant le travail. Avant de commencer à travailler, il faudra donc régler la position des plaquettes (24) et/ou des plaquettes (30) pour que leur écartement soit égal ou légèrement supérieur au plus grand diamètre de l'âme centrale (2). Une fois cet écartement réglé, la plaquette (24) (organe racleur) et la plaquette (30) (élément palpeur) seront capables de contrôler ce diamètre sans que le faux-rond de l'âme centrale (2) n'influence ce contrôle. En effet, comme la bague (17) à laquelle sont fixés les bras (20, 21) peut tourner autour de la traverse (14), l'ensemble organe racleur - élément palpeur peut suivre le faux-rond. Ceci est bien représenté schématiquement sur la figure 5. Sur cette figure, on voit la surface extérieure de l'âme centrale (2) dont l'axe longitudinal (16) est décentré d'une distance (44) par rapport à l'axe de rotation (45) défini par les pivots (39). L'écartement entre les plaquettes (24 et 30) est réglé sur le diamètre le plus grand de l'âme centrale (2). Lorsque l'âme centrale (2) aura tourné d'un demi-tour par rapport à l'axe (45), elle occupera la position (2') représentée en pointillés qui est la position symétrique de la position (2) par rapport à l'axe (45). L'âme centrale (2), lors de son déplacement de l'autre côté de l'axe (45), pousse sur la plaquette (30). Cette poussée provoque la rotation de la plaquette (30) autour de l'axe (15) de la traverse (14) et entraîne dans cette rotation la plaquette (24). On voit donc que dans la position (2') de l'âme centrale, la plaquette (24) qui occupe maintenant la position (24') a suivi le déplacement de l'âme centrale et peut toujours racler la terre collée à l'âme centrale aussi efficacement que dans la position (24). Ce dispositif est aussi insensible à la flèche du rouleau. En effet, la flèche étant plus importante au milieu du rouleau qu'aux extrémités, chaque ensemble organe racleur - élément palpeur peut indépendamment des autres s'adapter à la valeur du faux-rond qui existe à l'endroit du rouleau où il opère.

Dans l'exemple qui vient d'être décrit, l'élément palpeur est constitué par la plaquette (30) qui occupe une position relative par rapport à l'âme centrale (2) sensiblement identique à celle qu'occupe l'organe racleur, à savoir la plaquette (24). Ceci veut dire que la plaquette (30) est aussi capable de racler la terre qui est collée à l'âme centrale (2). En effet, si une accumulation de terre pousse sur la plaquette (24) et écarte celle-ci de l'âme centrale (2), la plaquette (30) se déplace alors vers l'âme centrale et pourra racler une accumulation de terre qui pourra éventuellement se trouver collée en cet endroit précis de l'âme centrale (2).

Les figures 6, 7 et 8 décrivent une variante de réalisation de l'invention. Les pièces communes à la réalisation qui vient d'être décrite et à cette variante, ne seront plus redécrites dans la suite et auront le même numéro de repère que précédemment.

Dans cette variante, l'élément palpeur est constitué par un galet (46). Le galet (46) tangente la surface extérieure de l'âme centrale (2) en un point (47) ou du moins s'étend dans le voisinage de ce point. Le point (47) est préférentiellement sensiblement diamétralement opposé au point (25) par rapport à l'âme centrale (2), mais comme précédemment on ne sortira pas du cadre de l'invention si ces points ne sont pas diamétralement opposés. La distance du point (47) à l'axe longitudinal (15) de la traverse (14) est plus grande que la distance du point (25) à ce même axe (15). Dans ce cas, un effort appliqué par l'âme centrale (2) sur le galet (46), produit un effort amplifié au niveau de la plaquette (24).

Le montage du galet (46) sur le bras (21) est représenté sur la figure 7. A l'extrémité libre du bras (21) sont fixées deux ailes (48, 49) cambrées de sorte à définir une chape. Les deux ailes (48, 49) comportent chacune un trou, de même que le galet (46). L'ensemble de ces trous est traversé par un tourillon (50) sur lequel tourne le galet (46). Le déplacement axial du tourillon (50) est condamné par deux goupilles (51, 52) situées à l'extérieur de part et d'autre des ailes (48, 49).

Comme visible sur la figure 8, dans cette variante de réalisation, le galet (46) sert d'élément de palpage à trois plaquettes (24). A cet effet, les trois bras (20) qui supportent les plaquettes (24) sont fixés sur une bague (53) ayant une longueur adéquate. Comme dans l'exemple précédent, la position correcte des bagues (53) par rapport aux couronnes (4) de saillies (3), est obtenue au moyen de bagues entretoise (18) qui sont fixées à la traverse (14) à l'aide de goupilles (19). Le décrottage effectué par cette réalisation peut être légèrement moins efficace que celui de la réalisation précédente puisque le déplacement de l'élément palpeur provoque le déplacement de trois organes racleurs. Son intérêt réside néanmoins dans la réduction du prix de revient puisque le nombre de pièces est plus petit que dans la réalisation précédente.

Bien que cela ne soit pas représenté, le montage de la traverse (14) sur le rouleau (1) peut être fait comme dans l'exemple précédent.

On ne sortira par ailleurs pas du cadre de l'invention si par exemple dans la réalisation représentée dans les figures 6 à 8, on remplace le galet (46) par une plaquette semblable à la plaquette (30) de la réalisation représentée dans les figures 1 à 5 et/ou si la distance du point (47) à l'axe (15) est égale à la distance du point (25) à ce même axe (15). Par ailleurs, le nombre de plaquettes (24) pilotées par le galet (46) peut être différent de trois.

On ne sortira pas non plus du cadre de l'invention si dans la réalisation décrite dans les figures 1 à 5, les plaquettes (30) sont remplacées par des galets (46) et/ou si la distance du point (31) à l'axe (15) est différente de la distance du point (25) à ce même axe (15).

Par ailleurs, les saillies (3) pourront dans le cadre de l'invention avoir une forme différente de celle qu'elles ont dans les figures.

## Revendications

1. Rouleau agricole (1) comportant une âme centrale (2) munie de saillies (3) dirigées vers l'extérieur et disposées suivant des couronnes (4) entre lesquelles sont agencés des organes racleurs (24) qui s'étendent jusqu'à ladite âme centrale (2), lesdits organes racleurs (24) comportant des moyens (14, 17, 53, 20, 21) qui leur permettent de pivoter autour d'un axe (15) s'étendant transversalement à la direction d'avance (9) du rouleau, caractérisé par le fait que les moyens (14, 17, 53, 20, 21) permettent aux organes racleurs (24) de pivoter librement autour de l'axe (15) et qu'au moins un élément palpeur (30, 46) fait sensiblement garder aux organes racleurs (24) leur position par rapport à une partie au moins de la surface extérieure de l'âme centrale (2) du rouleau (1).

2. Rouleau agricole selon la revendication 1, caractérisé par le fait que l'axe (15) de pivotement des organes racleurs (24) est sensiblement parallèle à l'axe du rouleau (1).

3. Rouleau agricole selon l'une au moins des revendications 1 ou 2, caractérisé par le fait que le point de palpage (31, 47) du ou des éléments palpeurs (30, 46) est situé d'un côté du plan passant sensiblement par l'axe du rouleau (1) et l'axe (15) de pivotement des organes racleurs (24), tandis que le point de raclage (25) des organes racleurs (24) est situé de l'autre côté de ce plan.

4. Rouleau agricole selon l'une au moins des revendications précédentes, caractérisé par le fait que le point de palpage (31, 47) des éléments palpeurs (30, 46) est sensiblement diamétralement opposé au point de raclage (25) des organes racleurs (24), par rapport à l'âme centrale (2) du rouleau (1).

5. Rouleau agricole selon l'une au moins des revendications précédentes, caractérisé par le fait que les éléments palpeurs (30, 46) palpent la surface extérieure de l'âme centrale (2) du rouleau (1).

6. Rouleau agricole selon l'une au moins des revendications précédentes, caractérisé par le fait que la distance du point de palpage (31, 47) à l'axe (15) de pivotement des organes racleurs (24) est sensiblement égale à la distance du point de raclage (25) à ce même axe (15).

7. Rouleau agricole selon l'une au moins des revendications 1 à 5, caractérisé par le fait que la distance du point de palpage (31, 47) à l'axe (15) de pivotement des organes racleurs (24) est différente de la distance du point de raclage (25) à ce même axe (15).

8. Rouleau agricole selon la revendication 7, caractérisé par le fait que la distance du point de palpage (31, 47) à l'axe (15) de pivotement des organes racleurs (24) est supérieure à la distance du point de raclage (25) à ce même axe (15).

9. Rouleau agricole selon l'une au moins des revendications précédentes, caractérisé par le fait que d'une manière connue en soi les organes racleurs (24) sont assemblés en groupes d'organes racleurs qui sont indépendants les uns des autres, et que chaque groupe d'organes racleurs (24) comporte au moins un élément palpeur (30, 46).

10. Rouleau agricole selon l'une au moins des revendications 1 à 8, caractérisé par le fait que les organes racleurs (24) sont indépendants les uns des autres, et que chaque organe racleur (24) possède son propre élément palpeur (30, 46).

11. Rouleau agricole selon la revendication 3 ou l'une au moins des revendications 4 à 10 en combinaison avec la revendication 3, caractérisé par le fait qu'un ensemble de palpage — raclage se compose d'une bague (17, 53) qui tourne sur une traverse cylindrique (14) centrée sur l'axe (15), ladite bague (17, 53) comportant un ou plusieurs bras (20) à l'extrémité libre du ou desquels sont fixés le ou les organes racleurs (24), et un ou plusieurs bras (21) à l'extrémité libre du ou desquels sont fixés le ou les éléments palpeurs (30, 46).

12. Rouleau agricole selon la revendication 11, caractérisé par le fait que la position des bagues (17, 53) par rapport aux couronnes (4) de saillies (3), est définie au moyen de bagues entretoise (18, 43) fixées à la traverse (14).

13. Rouleau agricole selon l'une au moins des revendications précédentes, caractérisé par le fait que l'élément palpeur (30) comporte des moyens qui peuvent remplir une fonction de raclage.

14. Rouleau agricole selon la revendication 13, caractérisé par le fait que l'élément palpeur est constitué par une plaquette (30).

15. Rouleau agricole selon la revendication 14, caractérisé par le fait que la position de la plaquette (30) par rapport à l'âme centrale (2) du rouleau (1) est réglable.

16. Rouleau agricole selon l'une au moins des revendications 14 ou 15, caractérisé par le fait que d'une manière connue en soi, l'organe racleur comporte une plaquette (24), et que la plaquette (30) est sensiblement parallèle à la plaquette (24).

17. Rouleau agricole selon l'une au moins des revendications 1 à 12, caractérisé par le fait que l'élément palpeur est constitué par un galet (46).

18. Machine agricole, caractérisée par le fait qu'elle comporte au moins un rouleau agricole suivant l'une des revendications 1 à 17.

## Claims

1. A field roller (1) having a central core (2) equipped with projections (3) directed outwards and arranged along crowns (4) between which are arranged scraper members (24) which extend up to the said central core (2), the said scraper members (24) including means (14, 17, 53, 20, 21) which enable them to pivot about an axis (15) which extends transversely to the direction (9) of advance of the roller, characterized by the fact that the means (14, 17, 53, 20, 21) enable the scraper members (24) to pivot freely about the axis (15) and that at least one feeler element (30, 46) makes the scraper members (24) substantially keep their position with respect to at least one portion of the outer surface of the central core (2) of the roller (1).

2. A field roller as in Claim 1, characterised by the fact that the axis (15) of pivot of the scraper members (24) is substantially parallel with the axis of the roller (1).

3. A field roller as in at least one of the Claims 1 or 2, characterized by the fact the feeler tip (31, 47) of any feeler element (30, 46) is located at one side of the plane passing substantially through the axis of the roller (1) and the axis (15) of pivot of the scraper members (24), whilst the scraper tip (25) of any scraper member (24) is located at the other side of this plane.

4. A field roller as in at least one of the preceding Claims, characterized by the fact that the feeler tips (31, 47) of the feeler elements (30, 46) are substantially diametrically opposite the respective scraper tips (25) of the scraper members (24) with respect to the central core (2) of the roller (1).

5. A field roller as in at least one of the preceding Claims, characterized by the fact that the feeler elements (30, 46) feel the outer surface of the central core (2) of the roller (1).

6. A field roller as in at least one of the preceding Claims, characterized by the fact that the distance of the feeler tip (31, 47) from the axis (15) of pivot of the scraper members (24) is substantially equal to the distance of the scraper tip (25) from this same axis (15).

7. A field roller as in at least one of the Claims 1 to 5, characterized by the fact that the distance of the feeler tip (31, 47) from the axis (15) of pivot of the scraper members (24) differs from the distance of the scraper tip (25) from this same axis (15).

8. A field roller as in Claim 7, characterized by the fact that the distance of the feeler tip (31, 47) from the axis (15) of pivot of the scraper members (24) is greater than the distance of the scraper tip (25) from this same axis (15).

9. A field roller as in at least one of the preceding Claims, characterized by the fact that in a manner in itself known the scraper members (24) are assembled in scraper member groups which are independent of one another, and that each group of scraper members (24) includes at least one feeler element (30, 46).

10. A field roller as in at least one of the Claims 1 to 8, characterized by the fact that the scraper members (24) are independent of one another, and that each scraper member (24) has its own feeler element (30, 46).

11. A field roller as in Claim 3 or at least one of the Claims 4 to 10 in combination with Claim 3, characterized by the fact that one feeler-scraper assembly is composed of a ring (17, 53) which turns about a cylindrical crossbar (14) centred upon the axis (15), the said ring (17, 53) including one or more arms (20) to the free end or ends of which are attached the scraper member or members (24), and one or more arms (21) to the free end or ends of which are attached the feeler element or elements (30, 46).

12. A field roller as in Claim 11, characterized by the fact that the positions of the rings (17, 53) with respect to the crowns (4) of projections (3) are defined by means of spacer rings (18, 43) attached to the crossbar (14).

13. A field roller as in at least one of the preceding Claims, characterized by the fact that the feeler element (30) includes means which can fulfil a scraping function.

14. A field roller as in Claim 13, characterized by the fact that the feeler element consists of a small plate (30).

15. A field roller as in Claim 14, characterized by the fact the position of the small plate (30) with respect to the central core (2) of the roller (1) is adjustable.

16. A field roller as in at least one of the Claims 14 or 15, characterized by the fact that in a manner in itself known the scraper member includes a small plate (24) and that the small plate (30) is substantially parallel with the small plate (24).

17. A field roller as in at least one of the Claims 1 to 12, characterized by the fact that the feeler element consists of a small wheel (46).

18. An agricultural machine characterized by the fact that it includes at least one field roller in accordance with one of the Claims 1 to 17.

## Patentansprüche

1. Landwirtschaftliche Walze (1) mit einem zentralen Körper (2) der mit nach aussen gerichteten und entlang von Ringkränzen (4) angeordneten Vorsprüngen (3) versehen ist, zwischen welchen Abstreiforgane (24) angeordnet sind, die sich bis zum zentralen Körper (2) erstrecken, wobei diese Abstreiforgane (24) Mittel (14, 17, 53, 20, 21) zum Schwenken um eine sich quer zur Vorschubrichtung (9) der Walze erstreckende Achse (15) umfassen, dadurch gekennzeichnet, dass durch die Mittel (14, 17, 53, 20, 21) die Abstreiforgane (24) frei um die Achse (15) schwenkbar sind und dass mindestens ein Tastelement (30, 46) die Abstreiforgane (24) im wesentlichen in ihrer Stellung in bezug auf wenigstens einen Teil der Aussenfläche des zentralen Körpers der Walze (1) hält.

2. Landwirtschaftliche Walze nach Anspruch 1, dadurch gekennzeichnet, dass die Schwenkachse (15) der Abstreiforgane (24) im wesentlichen parallel zur Achse der Walze (1) ist.

3. Landwirtschaftliche Walze nach mindestens einem der Ansprüche 1 oder 2, dadurch gekennzeichnet, dass der Tastpunkt (31, 47) des oder der Tastelemente (30, 46) an einer Seite einer sich im wesentlichen durch die Achse der Walze (1) und die Schwenkzachse (15) der Abstreiforgane (24) erstreckenden Ebene angeordnet ist, wohingegen der Abstreifpunkt (25) der Abstreiforgane (24) an der anderen Seite dieser Ebene angeordnet ist.

4. Landwirtschaftliche Walze nach mindestens einem der vorhergehenden Ansprüche, dadurch gekennzeichnet, dass der Tastpunkt (31, 47) der Tastelemente (30, 46), bezogen auf den zentralen Körper (2) der Walze (1), im wesentlichen diametral gegenüberliegend dem Abstreifpunkt (25) der Abstreiforgane (24) angeordnet ist.

5. Landwirtschaftliche Walze nach mindestens einem der vorhergehenden Ansprüche, dadurch gekennzeichnet, dass die Tastelemente (30, 46) die Aussenfläche des zentralen Körpers (2) der Walze (1) abtasten.

6. Landwirtschaftliche Walze nach mindestens einem der vorhergehenden Ansprüche, dadurch gekennzeichnet, dass der Abstand des Tastpunktes (31, 47) zur Schwenkachse (15) der Abstreiforgane (24) im wesentlichen etwa gleich dem Abstand des Abstreifpunktes (25) zur selben Achse (15) ist.

7. Landwirtschaftliche Walze nach mindestens einem der Ansprüche 1 bis 5, dadurch gekennzeichnet, dass der Abstand des Tastpunktes (31, 47) zur Schwenkachse (15) der Abstreiforgane (24) ungleich dem Abstand des Abstreifpunktes (25) von der selben Achse (15) ist.

8. Landwirtschaftliche Walze nach Anspruch 7, dadurch gekennzeichnet, dass der Abstand des Tastpunktes (31, 47) zur Schwenkachse (15) der Abstreiforgane (24) grösser als der Abstand des Abstreifpunktes (25) zur selben Achse (15) ist.

9. Landwirtschaftliche Walze nach mindestens einem der vorhergehenden Ansprüche, dadurch gekennzeichnet, dass die Abstreiforgane (24), wie an sich bekannt, zu voneinander unabhängigen Gruppen von Abstreiforganen zusammengefasst sind, und dass Jede Gruppe von Abstreiforganen (24) mindestens ein Tastelement (30, 46) umfasst.

10. Landwirtschaftliche Walze nach mindestens einem der Ansprüche 1 bis 8, dadurch gekennzeichnet, dass die Abstreiforgane (24) voneinander unabhängig sind, und dass jedes Abstreiforgan (24) sein eigenes Tastelement (30, 46) besitzt.

11. Landwirtschaftliche Walze nach Anspruch 3 oder mindestens einem der Ansprüche 4 bis 10 in Kombination mit dem Anspruch 3, dadurch gekennzeichnet, dass eine Tast/Abstreif — Einheit eine um eine auf die Achse (15) zentrierte, zylindrische Querstange (14) rotierende Hülse (17, 53) welche Hülse (17, 53) einen oder mehrere Schenkel (20) trägt, an dessen oder an deren freien Enden das oder die Abstreiforgane (24) befestigt sind, und einen oder mehrere Schenkel (21), an dessen oder an deren freien Enden der oder die Tastelemente (30, 46) befestigt sind umfasst.

12. Landwirtschaftliche Walze nach Anspruch 11, dadurch gekennzeichnet, dass die Stellung der Hülsen (17, 53) bezogen auf die Ringkränze (4) von Vorsprüngen (3), mittels an der Querstange (14) befestigten Distanzhülsen (18, 43) bestimmt ist.

13. Landwirtschaftliche Walze nach mindestens einem der vorhergehenden Ansprüche, dadurch gekennzeichnet, dass das Tastelement (30) mit eine Abstreiffunktion erfüllenden Mitteln versehen ist.

14. Landwirtschaftliche Walze nach Anspruch 13, dadurch gekennzeichnet, dass das Tastelement durch ein Plättchen (30) gebildet ist.

15. Landwirtschaftliche Walze nach Anspruch 14, dadurch gekennzeichnet, dass die Stellung des Plättchens (30), bezogen auf den zentralen Körper (2) der Walze (1), verstellbar ist.

16. Landwirtschaftliche Walze nach mindestens einem der Ansprüche 14 oder 15, dadurch gekennzeichnet, dass, wie an sich bekannt, das Abstreiforgan ein Plättchen (24) aufweist und dass das Plättchen (30) im wesentlichen parallel zum Plättchen (24) ist.

17. Landwirtschaftliche Walze nach mindestens einem der Ansprüche 1 bis 12, dadurch gekennzeichnet, dass das Tastelement durch eine Rolle (46) gebildet ist.

18. Landwirtschaftliche Maschine, dadurch gekennzeichnet, dass sie mindestens eine landwirtschaftliche Walze nach einem der Ansprüche 1 bis 17 aufweist.

EP 0 165 887 B1

Fig.1

Fig.2

Fig.3

## Fig.5

## Fig.4

2

Fig.6

Fig.7

Fig.8